# EUROPEAN PATENT SPECIFICATION

(11) **EP 3 214 948 B1**
(45) Date of publication and mention of the grant of the patent: **14.07.2021**
(21) Application number: 15856493.0
(22) Date of filing: 02.11.2015
(51) Int. Cl.: A23L 2/66, A23L 29/262

(54) **EFFECTIVE PLANT PROTEIN DRINK STABILIZERS COMPRISING COLLOIDAL MICROCRYSTALLINE CELLULOSE MADE FROM NON-DISSOLVING CELLULOSE PULP**
EFFEKTIVE PFLANZENPROTEINGETRÄNKESTABILISATOREN MIT KOLLOIDALER MIKROKRISTALLINER CELLULOSE AUS NICHTLÖSLICHEM ZELLSTOFF
STABILISANTS DE BOISSON PROTÉIQUE VÉGÉTALE EFFICACES COMPRENANT DE LA CELLULOSE MICRO-CRISTALLINE COLLOÏDALE FABRIQUÉE À PARTIR DE PÂTE DE CELLULOSE NON SOLUBLE

(30) Priority: 03.11.2014 US 201462074322 P
(43) Date of publication of application: 13.09.2017
(73) Proprietor: DuPont Nutrition USA, Inc., Wilmington DE 19805 (US)
(72) Inventor: RUSZKAY, Tom, Hockessin, DE 19707 (US); TAN, Zheng, Charlotte, NC 28277 (US); LYNCH, Maurice Gerard, 1410 Waterloo (BE); TSAI, Albert, New Castle, DE 19720 (US); TOH, Joyce, Langhorne, PA 19047 (US); AGARWAL, Parminder, Slingerlands, NY 12159 (US)
(74) Representative: DuPont EMEA
(86) International application number: PCT/US2015/058621
(87) International publication number: WO 2016/073358

(56) References cited:
- WO-A1-2013/052114
- WO-A1-2013/052114
- US-A1- 2006 144 535
- US-A1- 2006 144 535
- US-A1- 2013 150 462
- US-A1- 2013 150 462
- None

## Description

### FIELD OF THE INVENTION

The invention relates to co-attrited microcrystalline cellulose/carboxymethyl cellulose ("MCC/CMC") drink stabilizer compositions containing microcrystalline cellulose with a unique native hemicellulose content profile made from non-dissolving cellulose pulp. The invention also relates to plant protein based drink compositions stabilized using the improved stabilizer and methods of stabilizing plant protein based drink compositions using the improved stabilizer.

### BACKGROUND OF THE INVENTION

Microcrystalline cellulose ("MCC" or "cellulose gel") is commonly used in the food industry to enhance the properties or attributes of a final food product. For example, it has been used as a binder and stabilizer in food applications, including in beverages, and as stabilizers. It has also been used as a binder and disintegrant in pharmaceutical tablets, as a suspending agent in liquid pharmaceutical formulations, and as binders, disintegrants, and processing aids in industrial applications, in household products such as detergent and/or bleach tablets, in agricultural formulations, and in personal care products such as dentifrices and cosmetics.

MCC is traditionally produced using cellulose sourced from purified cotton or dissolving wood pulp. These sources of dissolving cellulose pulp have a very high alpha-cellulose content of 90 percent or more. Hemicellulose in MCC is considered an impurity. The cellulose is treated with a mineral acid, preferably hydrochloric acid (acid hydrolysis). The acid selectively attacks the less ordered regions of the cellulose polymer chain thereby exposing and freeing the crystalline sites which form crystallite aggregates which constitute the microcrystalline cellulose. These are then separated from the reaction mixture, and washed to remove degraded by-products. The resulting wet mass, generally containing 40 to 60 percent moisture, is referred to in the art by several names, including 'hydrolyzed cellulose', 'hydrolyzed cellulose wetcake', 'level-off DP cellulose', 'microcrystalline cellulose wetcake', or simply 'wetcake'.

The classic process for MCC production is acid hydrolysis of purified cellulose, pioneered by O. A. Battista (US Pat. 2,978,446; 3,023,104; and 3,146,168). In efforts to reduce the cost while maintaining or improving the quality of MCC, various alternative processes have been proposed. Among these are steam explosion (US Pat. 5,769,934; Ha et al.), reactive extrusion (US Pat. 6,228,213; Hanna et al.), one-step hydrolysis and bleaching (World Patent Publication WO2001002441 A1; Schaible et al.), and partial hydrolysis of a semi-crystalline cellulose and water reaction liquor in a reactor pressurized with oxygen and/or carbon dioxide gas and operating at 100°C to 200°C (US Pat. 5,543,511; Bergfeld et al.).

Microcrystalline cellulose and/or hydrolyzed cellulose wetcake has been modified for a variety of uses. In food products it is used as a gelling agent, a thickener a fat substitute and/or non-caloric filler, and as a suspension stabilizer and/or texturizer. It has also been used as an emulsion stabilizer and suspending agent in pharmaceutical and cosmetic lotions and creams. Modification for such uses is carried out by subjecting micro-crystalline cellulose or wetcake to intense attrition (high shear) forces as a result of which the crystallites are substantially subdivided to produce finely divided particles. However, as particle size is diminished, the individual particles tend to agglomerate or hornify upon drying. A protective colloid, such as sodium carboxymethylcellulose ("CMC"), may be added during attrition or following attrition but before drying. The protective colloid wholly or partially neutralizes the hydrogen or other bonding forces between the smaller sized particles. Colloidal MCC, such as the CMC-coated MCC described in US Pat. 3,539,365 (Durand et al.). This additive also facilitates re-dispersion of the material following drying. The resulting material is frequently referred to as attrited MCC or colloidal MCC.

On being dispersed in water, colloidal MCC forms white, opaque, thixotropic gels. FMC Corporation (Philadelphia, PA, USA) manufactures and sells various grades of this product, which comprise co-processed MCC and sodium CMC under the designations of, among others, AVICEL®, GELSTAR®, and NOVAGEL®.

Alternatives sources have been investigated for making MCC. MCC made from alternative sources have also been mentioned for making the co-attrited MCC/CMC or colloidal MCC, such as in United States Patent Applications US 2013/0090391 (Tan et al.), US 2013/0150462 (Tan et al.), and WO 2013/052114 (Tan et al.). In particular these attempts include utilizing non-dissolving cellulose pulp for MCC production including fluff cellulose pulp, agricultural waste, and other plant parts not traditionally used for MCC production. However, non-dissolving cellulose pulps have produced MCC or colloidal MCC with inferior performance in food products compared to MCC made from dissolving cellulose pulp.

There remains a need, to obtain a colloidal MCC composition made from non-dissolving cellulose pulp including fluff cellulose pulp having enhanced stabilization, useful to a variety of applications, particularly plant protein based drinks.

### OBJECT OF THE INVENTION

It is an object of the embodiments of the invention to provide a co-attrited MCC/CMC stabilizer compositions with unique native hemicellulose contents that are made from non-dissolving cellulose pulp. It is also an object of the embodiments of the invention to provide improved stability in plant protein based drinks using the co-attrited MCC/CMC stabilizer.

### SUMMARY OF THE INVENTION

The present invention provides a co-attrited MCC/CMC stabilizer composition comprising a microcrystalline cellulose ("MCC") made from non-dissolving cellulose pulp, a carboxymethylcellulose ("CMC"), wherein a native hemicellulose (for example, xylan and mannan) content of the non-dissolving pulp is about 2.0% to about 10.0% by weight on a dry basis, the MCC and CMC are co-attrited, 15% to 100% by weight of the total amount of MCC is made from non-dissolving cellulose pulp, the weight ratio of MCC to CMC is about 95:5 to 70:30, and the stabilizer has an initial viscosity of 400 mPa.s (cps) to 700 mPa.s (cps) when dispersed in water at 2.6% solids when measured using a RVT Viscometer at 20 rpm and 20°C to 23°C. Preferably, the native hemicellulose is a xylan, a mannan, or a combination thereof.

The present invention also provides plant protein based drink compositions stabilized by the co-attrited MCC/CMC stabilizer. In certain other non-limiting embodiments of the present invention, the drink composition is a non-dairy milk drink, a flavored non-dairy milk drink, a coffee drink, a protein shake, a nutritional supplement, an infant formula, a meal replacement drink, or a weight loss drink. Preferably, the drink composition is a non-dairy milk drink, and more preferably peanut milk.

The present invention also provides methods of making the stabilizer composition of the present invention, comprising co-attriting (i) a microcrystalline cellulose (MCC) having a non-dissolving cellulose pulp content that is about 15% to 100% of the MCC on a dry weight basis wherein the non-dissolving cellulose pulp has a native hemicellulose content that is about 2% to about 10% of the non-dissolving cellulose pulp on a dry weight basis, and (ii) a carboxymethylcellulose (CMC), wherein the amount of MCC and the amount of CMC are in a weight ratio of about 95:5 to about 70:30, and wherein the co-attrited MCC/CMC has an initial viscosity of 400 mPa.s (cps) to 700 mPa.s (cps) when dispersed in water at 2.6% solids when measured using a RVT Viscometer at 20 rpm and 20°C to 23°C. In certain other non-limiting embodiments of the present invention, the method further includes providing an amount of a CMC having a degree of substitution (DS) of 0.9-1.5 and a viscosity of 200-4000 mPa.s (cps), and wet blending said CMC with the co-attrited MCC/CMC. Preferably, the amount of CMC having a degree of substitution (DS) of 0.9-1.5 and a viscosity of 200-4000 mPa.s (cps) is provided such that a weight ratio of co-attrited MCC/CMC to CMC having a degree of substitution (DS) of 0.9-1.5 and a viscosity of 200-4000 mPa.s (cps) is about 99:1 to 85:15, and more preferably about 92:8. The viscosity of the CMC having a degree of substitution (DS) of 0.9-1.5 and a viscosity of 200-4000 mPa.s (cps) is measured using a Brookfield viscometer at 2% solids in water of 25°C at 30 rpm, spindle #2.

The present invention also provides methods of stabilizing plant protein based drink compositions using the co-attrited MCC/CMC drink stabilizer. In certain other non-limiting embodiments of the present invention, the drink composition stabilized by the co-attrited MCC/CMC drink stabilizer is a non-dairy milk drink, a flavored non-dairy milk drink, a coffee drink, a protein shake, a nutritional supplement, an infant formula, a meal replacement drink, or a weight loss drink. Preferably, the drink composition is a non-dairy milk drink, and more preferably peanut milk.

### DETAILED DESCRIPTION OF THE INVENTION

In certain non-limiting embodiments of the present invention, the non-dissolving cellulose pulp is paper grade pulp, fluff pulp, Kraft pulp, sulfite pulps, soda pulp, southern bleached softwood Kraft pulp, northern bleached softwood Kraft pulp, bleached Eucalyptus Kraft pulp, bleached hardwood Kraft pulp, non-wood pulp, cellulosic agricultural residue, or a combination thereof. Preferably, the non-dissolving cellulose pulp is bleached softwood Kraft pulp (for example, CPH pulp).

As is employed herein, "colloid" and "colloidal" are used interchangeably in the specification to define particles that may be suspended in a mixture. As known to those of ordinary skill in the art, colloidal particles are of a certain average particle size, for example, on the order of about 0.1 to 10 microns. The colloidal particles described herein may be of any suitable particle size, provided that they are able to form colloidal suspensions.

"Gel" refers to a soft, solid, or solid-like material which consists of at least two components, one of which is a liquid present in abundance (Almdal, K. et al.; Towards a phenomenological definition of the term 'gel'. Polymer and Gel Networks 1993, 1, 5-17). "Gel strength G" refers to the reversibly stored energy of the system (the elastic modulus G') and relative to the compositions herein is a function of the cellulose concentration.

The main components of the cellulose pulps are generally, in decreasing order of abundance, cellulose, hemicellulose and lignin. Cellulose and hemicellulose are both carbohydrates, cellulose (sometimes referred to as α-cellulose) being a linear polysaccharide with six carbon units (β-1, 4-linked D-glucose). Hemicelluloses are any polysaccharides in plant cell walls that are not cellulose. Hemicelluloses include xyloglucans, xylans, mannans, galactans, and β-glucans. Hemicelluloses are generally much shorter polymers than the cellulose. Xylan contains predominantly β-1, 4-linked D-xylose. Mannan contains predominantly β-1, 4-linked D-mannose, and D-glucose (as in glucomannans). Lignin is an aromatic polymeric material that is largely acid insoluble. Lignin serves as a natural binder for the cellulose fibers in the cellulose source material.

As used herein, the term "native" hemicellulose refers to any hemicellulose that is naturally occurring in the pulp used to make MCC. The MCC is made from a non-dissolving cellulose pulp or mixtures of non-dissolving cellulose pulp and dissolving pulp. If a mixture is desired, then, for example, at least 15% of the total MCC can be made from non-dissolving cellulose pulp. Non-dissolving cellulose pulps include, for example, paper grade pulps, fluff pulps, Kraft pulps, sulfite pulps, soda pulps, southern bleached softwood Kraft pulps ("SBSK"), northern bleached softwood Kraft pulps ("NBSK"), bleached Eucalyptus Kraft pulps ("BEK"), non-wood pulps, and cellulosic agricultural residues. Specific bleached softwood Kraft pulps include CPH pulp from Weyerhaeuser. Dissolving pulps include dissolving wood pulps, viscose grade pulps, rayon grade pulps, and specialty grade pulps. Dissolving pulps have a high cellulose content of greater than 90% (usually higher than 92%) and particularly low hemicellulose content. In one embodiment, the MCC used is one approved for human consumption by the United States Food and Drug Administration.

All viscosities of the CMC referred to herein may be measured as follows. The viscosity of less than 100 mPa.s (cps) may be measured using a Brookfield Viscometer at 2% solids in water at 25°C, 60 rpm, spindle #1. "Medium viscosity" CMC as sometimes used herein refers to CMC having a range of about 200 to 4,000 mPa.s (cps) (e. g., when measured using a Brookfield viscometer at 2% solids in water, 25C., at 30 rpm, spindle #2). Any CMC that has higher viscosity than "medium viscosity" may be considered "high viscosity" grade CMC (and such viscosity can be measured using a Brookfield viscometer at 2% solids in Water, 25°C, at 30 rpm, spindle #3 or #4).

The MCC and CMC are co-attrited by all means known in the art, such as those methods described in US Patent Application 2013/0090391. Among others, these methods include mixing a water-soluble CMC with MCC wet cake of at least 42% solids, wherein the weight ratio of the MCC to the CMC is about 95:5 to about 70:30. A particular weight ratio of the MCC to the CMC is about 90:10 to about 70:30; a more particular weight ratio of the MCC to the CMC is about 90:10 to about 75:25.

The moist mixture is extruded with sufficient intensity to achieve co-attrition and interaction among the components. As used in this specification, the terms "attrited" and "attrition" are used interchangeably to mean a process that effectively reduces the size of at least some if not all of the particles to a colloidal size. The processing is a mechanical processing that introduces shearing force either to an MCC wet cake before blending with CMC or to an admixture of MCC wet cake and CMC. "Co-attrition" refers to application of high shear forces to an admixture of the MCC and CMC component. Suitable attrition conditions may be obtained, for example, by co-extruding, milling, or kneading.

The MCC/CMC co-attrition employed herein is done at high intensity with high shear and high compression, so that the resulting colloidal MCC product is sufficiently attrited. As used herein, "shear force" refers to an action resulting from applied force that causes or tends to causes two contiguous parts of a mixture to slide relative to each other in a direction generally parallel to their plane of contact. The amount of force applied must be sufficient to create associations between the MCC particles and the CMC. If the force applied is insufficient, the components remain too "slippery" to transfer the shear force applied to the material or admixture to accomplish intimate associations. In that case, the shear force is primarily dissipated as mechanical energy by sliding action. Any means to increase the extrusion intensity may be used, including, but not limited to, extruder designs, duration/passes of extrusions, and extrusion with attriting aids including all mentioned by FMC patent US Pat. 6,037,380 (Venables et al.), high shear/high solids levels, and anti-slip agents.

A preferred way of effecting high extrusion intensity is to control the solids level of the MCC wet cake to be extruded. A wet cake solids level below about 41% yields a colloidal MCC with a given gel strength G'. However, if the wet cake solids content is higher than about 42%, the final colloidal MCC product shows a significant increase in gel strength G'. The comprehensive range of the effective wet cake solids level is between about 42% to 60%, preferably 42.5% to 60%, more preferably 42.5% to 55%, and most preferably 43% to 50%.

Strategies to increase the wet cake solids content include, but are not limited to, better dewatering during washing/filtering with more vacuum/felting/pressing/filter surface areas, in-line evaporation of water from the wet cake before CMC addition by steam heating, hot air flows, infrared irradiation, and RF/microwave heating. Another strategy is to add dry (or higher solids) MCC (or colloidal MCC such as Avicel RC591 or Avicel CL611 powders) into the wet cake, thereby increasing the total MCC solids content of the composition.

Improved extrusion/attrition intensity may be done with extended extrusion residence time (or more passes), and may also be achieved by cooling the extrusion temperature. The use of any common coolants is included in the invention's embodiments, and includes, but is not limited to, water cooling and ammonia cooling.

Chemical or mechanical treatments make MCC more amenable to extrusion/attrition intensity. For instance, during MCC acid hydrolysis cooking (or after MCC acid cooking), the MCC slurry can be treated with peroxide, peracetic acid, performic acid, persulfate, peroxymonosulfate (Oxone®), or ozone at acidic pH. The acid hydrolysis process to make MCC may also be enhanced with other additives (such as iron salts, *i.e.,* ferric chloride, ferrous sulfate). Another approach is to extend the cooking time of MCC acid hydrolysis as shown in Example 5 of US 2013/0090391. The effect of extended cooking time may also be achieved by varying other conditions of the acid hydrolysis, including a higher acid concentration and/or increased cooking temperature.

The techniques of boosting MCC wet cake solids content and mechanically or chemically varying the treatment of the MCC may be combined to increase the elastic modulus G' of the final product. Measurement of the elastic modulus G' is made with a TA-Instruments rheometer (ARES-RFS3) with oscillatory strain sweep at 1Hz and at 20°C, with gap size at 1.8 mm. Testing is performed at 24 hours set up of a 2.6% solids dispersion of the composition in deionized water.

The co-attrited component can be dispersed in water to form a slurry. The slurry can be homogenized and dried, preferably spray dried. The co-attrited component can also be wet blended with another CMC component. Improving performance of co-attrited MCC/CMC stabilizers by means of adding a second CMC is also known in the art, such as those described in US Patent Application 2013/0150462 and WO 2013/052114. Drying processes other than spray drying include, for example, fluidized bed drying, drum drying, bulk drying, and flash drying. Dry particles formed from the spray drying can be reconstituted in a desired aqueous medium or solution to form the compositions, edible food products, pharmaceutical applications, and industrial applications described herein.

The CMC that is co-attrited with MCC comprises an alkali metal CMC, for instance, sodium, potassium, or ammonium CMC. Most preferably, the CMC is sodium CMC. The degree of substitution (DS) represents the average number of hydroxyl groups substituted per anhydroglucose unit. For example, in CMC, each anhydroglucose unit contains three hydroxyl groups, which gives CMC a maximum theoretical DS of 3.0. The CMC that is co-attrited with MCC can be of any DS. Commercially available CMC with high DS (i.e., 0.9-1.5) include 12M8F, 12M31F, and 9H7F. CMC can be an alkali metal CMC, more particularly sodium, potassium, or ammonium CMC, and most preferably sodium CMC.

The CMC can be products made by any company. For instance, CMC products made by Ashland Inc. (Covington, KY) may be employed including AQUACEL®, AQUALON®, BONDWELL®, and BLANOSE® brand CMC. CMC grades include low viscosity (7LF), medium viscosity (7MF, 7M8SF, 9M31F, 12M8F, and 12M31F), and high viscosity (7H3SF, 7H3SXF, 7H4F, 7HF, 7HOF, 9H4F, and 9H7F). Other high viscosity CMCs such as Drispac® (Ashland) may also be used.

In addition to various types of extruders as practiced in current MCC manufacturing, equipment for co-attriting MCC/CMC include compression rolls/belts, calendaring rolls, mechanical refiner discs, ultrasonic refiners, high pressure homogenizers (including Micro-fluidic devices), high compression planetary mixers, and shockwave/cavitation devices.

The co-attrited MCC/CMC stabilizer is characterized by its viscosity at 20°C to 23°C. Usually, the Brookfield viscosity test is used to obtain an initial viscosity on the 2.6% solids dispersion in de-ionized water in 60 seconds and repeated to obtain a set-up viscosity after 24 hours. A RVT Viscometer, with appropriate spindle, is used at 20 rpm, at 20°C to 23°C. Devices and settings well known to one of ordinary skill in the art may also determine such viscosity.

Historically, food stabilizers using MCC made from non-dissolving cellulose pulp were unable to provide adequate food performance. It has been discovered by the inventors that co-attrited MCC/CMC compositions where the MCC is made from non-dissolving cellulose pulp and have higher native hemicellulose content can actually have outstanding food performance in stabilizing plant protein based drinks. Without being bound to any one theory and for discussion purposes only, the inventors hypothesize that the increased native mannan and xylan content of the present invention, in particular the increased native mannan content, advantageously and synergistically interacts with plant proteins to increase the food performance of the co-attrited MCC/CMC compositions containing MCC made from non-dissolving cellulose pulp.

To be described below is a plant protein based drink stabilizer containing MCC made from non-dissolving cellulose pulp used to stabilize a low solid water system and a peanut milk drink. One of ordinary skill in the art will understand, however, that the teachings of the present invention are not limited to such applications and may be used to stabilize other applications. Such applications include emulsions, beverages, sauces, soups, syrups, dressings, films, dairy and non-dairy milks and products, meat products, frozen desserts, cultured foods, bakery fillings, and bakery cream. Additional industrial applications include industrial coatings, including paints and stains, and insecticide and pesticide formulations.

### EXAMPLE I - Low Solids Water System

To test the stabilizing function of the stabilizers made with MCC from non-dissolving cellulose pulp, a low solid water model system (<1% total solids level) was prepared according to the formulation shown in Table 1. Avicel was used as a control for the stabilizing. All titanium dioxide (passed through a 325 mesh sieve) and colloidal MCC (Avicel or inventive stabilizer) powder were dry blended then mixed for approximately 10 minutes in deionized water using a high shear mixer (e.g. Silverson or equivalent). A contrasting agent was then added for enhanced visualization of the titanium dioxide particles and mixed further for approximately 5 minutes. The product was then passed through a Niro Soavi homogenizer with a two-stage pressure of 150 to 200 bars and filled into 100mL autoclavable bottles. The product was then sterilized for 1 minute in an Autoclave machine (e.g. type Hirayama HiClave HV-50 or equivalent). Finally, the mixture was cooled to 25°C in an ice bath.

**TABLE 1 - Low Solids Water Model System Formulation**

| **Component** | **% (w/w)** |
|---|---|
| Titanium Dioxide | 0.100 - 0.500% |
| Contrasting Agent | 0.025% |
| Stabilizer (Avicel control or invention samples) | To specify (0.65% or 0.75%) |
| De-ionized Water | Add to 100 % |

Food performance was measured by visual observation parameters such as the height of water phase and compactness of sedimentation of insoluble titanium dioxide, as well as the flow properties, as described in Table 2. Measurements were made on Days 0, 3, 7 and 14 at 25°C.

**TABLE 2 - Visual Observation Parameters for the Water Model System**

| **Visual Parameters** | **Explanation** | **Method of measurement** | **Standard Scale to be used** |
|---|---|---|---|
| **On the 100 ml bottle before any manipulation** | | | |
| Clear Top Separation | Visual Transparent Layer at the Top of the Liquid | Height of separation measured in terms of millimeters | Greater than 7mm is not acceptable |
| Sedimentation Layer | Particles Layer at the Bottom of the Liquid | Height of sedimentation layer measured in millimeters | Slightly compact or compact sedimentation is not acceptable |

| **In a 100 ml bottle during and after pouring** | | | |
|---|---|---|---|
| Flow Properties | During pouring, evaluate the level of rippling until gelled pieces are visible | | Greater than rippling is not acceptable |

### EXAMPLE II - Peanut Milk Drink

Ultra-high temperature processed (UHT) peanut milk drink having 1.0 to 1.5% protein content and 1.5 to 2.0% fat content was prepared using the formulation as shown in Table 3. Skimmed milk powder (SMP) was hydrated for approximately 20 minutes in water at approximately 45°C to 55°C using a medium shear propeller mixer (e.g. Heidolph RZR 2020 or equivalent). The milk solution was then heated to 65°C. All remaining powders (emulsifiers and stabilizer) were dry blended together with sugar, added to the hot milk solution, and mixed for approximately 5 to 10 minutes using a medium shear propeller mixer (e.g. type Heidolph RZR 2020 or equivalent).

**TABLE 3 - UHT Peanut Milk Drink Formulation**

| **Formulation** | **% (w/w)** |
|---|---|
| Skimmed Milk Powder (SMP) | 1.00% |
| Peanut Paste | 3.00% |
| Sugar | 6.00% |
| Emulsifiers | 0.15 - 0.30% |
| Buffering agent | 0.05% |
| Stabilizer (Avicel control or inventive stabilizer) | 0.54% |
| Water | Add to 100% |

While preparing the milk mixture, peanut paste was added to water at approximately 50 °C and mixed for approximately 5 to 10 minutes using a high shear mixer (e.g. type Silverson or equivalent). The peanut solution was then mixed together with milk mixture for another 5 minutes. Buffering agent was then added to adjust the peanut milk drink pH to about 7.00.

The product was then heated to about 70°C in a hot water bath or equivalent and passed through APV homogenizer with a two-stage pressure of 150 bars / 200 bars. After homogenization, the product was preheated to 70°C, then heated to 90° C, and then sterilized at 137 °C for 30 seconds in a UHT line (e.g. type Powerpoint International or equivalent). The product was then cooled in stages, first to 40°C and second to 20°C to 25°C. Finally the product was aseptically filled into sterile bottles. Food performance was measured by visual observation parameters as described in Table 4 below.

**TABLE 4 - Visual Observation Parameters for the UHT Peanut Milk Drink**

| **Visual Parameters** | **Explanation** | **Method of measurement** | **Standard Scale to be used** |
|---|---|---|---|
| **On the 125 ml bottle before any manipulation** | | | |
| Creaming | Fat separation at the Top of the Liquid | Height of fat separation measured in terms of millimeters. | |
| Serum Separation | Visual Transparent Layer at the Top of the Liquid | Height of separation measured in terms of millimeters | |
| Marbling | Clear Layers of Whey inside the product (waves) | | Greater than strong marbling is not acceptable |
| Sedimentation Layer | Particles Layer at the Bottom of the Liquid | Height of sedimentation layer measured in millimeters | Greater than loose sedimentation is not acceptable |

| **In a 125 ml bottle during and after pouring** | | | |
|---|---|---|---|
| Flow Properties | During pouring, evaluate the level of rippling until gelled pieces are visible | | Greater than Rippling is not acceptable |

### EXAMPLE III - Impact of Viscosity on Food Performance

Stabilizers were prepared using MCC made from non-dissolving cellulose pulp or a mixture of dissolving and non-dissolving cellulose pulp. MCC and CMC were co-attrited at a weight ratio of 85% MCC to 15% low viscosity CMC and spray dried. For a control, commercially available Avicel was used. The Avicel control contains MCC made from only dissolving cellulose pulp. It was also made by co-attrition at a weight ratio of 85% MCC with 15% low viscosity CMC and spray dried. The results, shown below in table 5, indicate that using MCC made from non-dissolving cellulose pulp rather than MCC made from a dissolving cellulose pulp required a higher viscosity product in order to match (or surpass) the performance of the Avicel control. In this example, 33% of the total MCC was made from CPH Pulp. It was found that samples with at least 400 mPa.s (cps) would be needed to match the control sample of 350 mPa.s (cps) viscosity in the peanut milk drink and 530 mPa.s (cps) in the water system. These results indicate that the food performance of the co-attrited stabilizer composition with MCC made from non-dissolving cellulose pulp is better in peanut milk than in the water model system. This suggests that there is a synergistic interaction between the co-attrited stabilizer composition with MCC made from non-dissolving cellulose pulp and the contents of the peanut milk, namely the peanut protein.

**TABLE 5 - Impact of Viscosity on Food Performance**

| **Stabilizer** | **Viscosity (2.6% solids)** | **Water System Test** | | **Peanut Milk Test** | |
|---|---|---|---|---|---|
| | | **% (w/w)** | **Food Performance** | **% (w/w)** | **Food Performance** |
| Avicel Control | 350 mPa.s (cps) | 0.75 | Pass all criteria | 0.54 | Pass all criteria |
| 33% of MCC is CPH Pulp based | 400 mPa.s (cps) | 0.75 | Fail Sedimentation | 0.54 | Pass all criteria |
| 33% of MCC is CPH Pulp based | 530 mPa.s (cps) | 0.75 | Pass all criteria | 0.54 | Pass all criteria |
| 33% of MCC is CPH Pulp based | 600 mPa.s (cps) | 0.75 | Pass all criteria | Not tested | - |

### EXAMPLE IV - Impact of the Percentage of Non-dissolving Cellulose Pulp MCC on Food Performance

Next the impact of the amount of substitution on food performance was determined. Samples with 33% and 67% of MCC from CPH Pulp were prepared each with a viscosity of 400 mPa.s (cps). These were then compared to the Avicel control (made from 100% dissolving cellulose pulp at a viscosity of 350 mPa.s (cps) in the UHT peanut milk drink. The results, shown below in Table 6, indicate that food performance decreases as the percentage of non-dissolving cellulose pulp increases. For instance, the samples with 33% of MCC from CPH Pulp outperform the samples with 67% of MCC from CPH Pulp.

**Table 6 - Impact of the Percentage of Substitution on Food Performance**

| **Stabilizer** | **Viscosity (2.6% solids)** | **% (w/w)** | **Food Results** |
|---|---|---|---|
| Avicel Control | 350 mPa.s (cps) | 0.54% | Pass all criteria |
| 33% of MCC is CPH Pulp based | 400 mPa.s (cps) | 0.54% | Pass all criteria |
| 67% of MCC is CPH Pulp based | 400 mPa.s (cps) | 0.54% | Fail Sedimentation |

### EXAMPLE V

As previously stated, it was learned that using MCC made from non-dissolving cellulose pulp (CPH pulp) requires higher viscosities to match the food performance of stabilizers having 100% of the MCC made from dissolving pulp such as the Avicel control. It was also learned that increasing the proportion of MCC made from non-dissolving cellulose pulp decreased food performance. To test whether the decreased food performance due to the increase proportion of MCC made from non-dissolving cellulose pulp could be counter acted by increasing the viscosity, stabilizers with 100% of the MCC made from non-dissolving cellulose pulp (CPH pulp) were compared to the Avicel control at elevated viscosities. It was found that there is an upper limit on the viscosity for stabilizers with MCC made from a non-dissolving cellulose pulp (CPH pulp), above which food performance may be compromised. The results, as shown below in Table 7, indicate that increasing the viscosity of the stabilizers with MCC made from a non-dissolving cellulose pulp (CPH pulp) to 680 mPa.s (cps), indeed boosted the food performance even against the control Avicel control in some case. However, it will become very susceptible to gelling when used above 0.65% (w/w). For the 770 mPa.s (cps) viscosity samples, gelling issues (food failures) occurred readily at all usage percentages by weight studied in this example. Therefore there is a range of initial viscosities for which the co-attrited stabilizer composition with MCC made from non-dissolving cellulose pulp has acceptable food performance.

**Table 7 - Limiting Viscosities in Low Solids Water Model System**

| **Stabilizer** | **Viscosity (2.6% solids)** | **% (w/w)** | **Food Results** |
|---|---|---|---|
| Avicel Control | 350 mPa.s (cps) | 0.65 | Fail by Sedimentation |
| Avicel Control | 350 mPa.s (cps) | 0.75 | Pass all criteria |
| 100 % of MCC is CPH Pulp based | 680 mPa.s (cps) | 0.65 | Pass all criteria |
| 100 % of MCC is CPH Pulp based | 680 mPa.s (cps) | 0.75 | Fail by gelling |
| 100 % of MCC is CPH Pulp based | 770 mPa.s (cps) | 0.65 | Fail by gelling |
| 100 % of MCC is CPH Pulp based | 770 mPa.s (cps) | 0.75 | Fail by gelling |

### EXAMPLE VI - Wet Blending of CMC having a DS of 0.9-1.5 and a viscosity of 200-4000 mPa.s Boosts Food Performance

It was previously shown that stabilizers with 100% of the MCC made from a non-dissolving cellulose pulp (CPH pulp) have reduced food performance when made at low viscosity levels. However, it was found that by wet-blending a CMC having a DS of 0.9-1.5 and a viscosity of 200-4000 mPa.s, the food performance may be improved, therefore enabling the use of MCC made from 100% non-dissolving cellulose pulps. MCC made from CPH pulp and CMC were co-attrited using weight ratio of 85% MCC to 15 % low viscosity CMC. For the dry blended samples, the co-attrited component was spray dried then dry blended with CMC having a DS of 0.9-1.5 and a viscosity of 200-4000 mPa.s in a ratio of 92 part stabilizer to 8 parts CMC having a DS of 0.9-1.5 and a viscosity of 200-4000 mPa.s. For the wet blended samples, the co-attrited stabilizer was wet blended with CMC having a DS of 0.9-1.5 and a viscosity of 200-4000 mPa.s also in a ratio of 92 part stabilizer to 8 parts CMC having a DS of 0.9-1.5 and a viscosity of 200-4000 mPa.s then spray dried. As shown in Table 8, wet blending enabled the desired food performance at 400 mPa.s (cps) outperforming the dry blended sample even at a higher initial viscosity of 500 mPa.s (cps).

**Table 8 - Food Performance of Co-attrited MCC/CMC after Wet Blending with CMC**

| **Stabilizer** | **Viscosity at 2.6% solids** | **Peanut Milk Test** | |
|---|---|---|---|
| | | **% (w/w)** | **Results** |
| Avicel Control | 350 mPa.s (cps) | 0.54 | Pass all criteria |
| Co-attrited component (100% of MCC is CPH Pulp based) | 280 mPa.s (cps) | 0.54 | Fail Immediate Sedimentation |
| Co-attrited component **dry blended** with CMC | 500 mPa.s (cps) | 0.54 | Fail Sedimentation |
| Co-attrited component **wet blended** with CMC | 400 mPa.s (cps) | 0.54 | Pass all criteria |

### EXAMPLE VII - Unique Chemical Compositions of the Inventive Stabilizers

The stabilizers containing MCC made from non-dissolving cellulose pulp have chemical compositions different from the current commercial colloidal products made from dissolving cellulose pulps, such as Avicel from FMC. It is found that carbohydrate analysis can easily identify and differentiate the invention stabilizers from the commercial colloidal MCC products in the market place, including FMC controls. The chemical composition of the inventive stabilizer has a unique hemicellulose content profile.

Carbohydrate analysis was done on the co-attrited MCC/CMC samples at Econotech Services Limited (Canada). The samples were hydrolyzed with sulfuric acid using a two-step technique, and the reaction conditions employed in the hydrolysis are as specified in TAPPI Method T249. This method is used to determine the five principal monosaccharides which define the carbohydrate composition of wood and wood pulp. The constituents determined quantitatively and on an absolute basis are glucan, mannan, arabinan, xylan and galactan. The hydrolyzed liquor was then analyzed for the five principal monosaccharides by Dionex ion chromatography using a pulsed amperometric detector.

In particular, Table 9 shows that the native hemicellulose content of the co-attrited stabilizer composition with MCC made from non-dissolving cellulose pulp is unique in that there is more xylan and mannan and less glucan present. All the inventive stabilizers are shown to have xylan and mannan content above about 2.0% by dry weight basis. All the samples have a weight ratio of 85% MCC to 15% CMC, are co-attrited MCC/CMC, and were tested directly without removing the CMC portions.

**Table 9 - Stabilizers made from non-dissolving cellulose pulp have unique native hemicellulose content**

| | **Carbohydrate % (dry basis)** | | | | | **Total %, dry basis** | **Acid Insoluble** |
|---|---|---|---|---|---|---|---|
| | **Xylan** | **Mannan** | **Arabinan** | **Galactan** | **Glucan** | | |
| FMC Avicel A (0% Viscose Pulp) | 0.9 | 0.4 | <0.1 | <0.1 | 87.1 | 90.2 | 1.8 |
| FMC Avicel B (33% Viscose Pulp) | 1.2 | 0.4 | <0.1 | <0.1 | 87.6 | 89.3 | 0.2 |
| FMC Avicel C (100% Viscose Pulp) | 1.7 | 0.3 | <0.1 | <0.1 | 87.1 | 89.4 | 0.2 |
| 33% of MCC is CPH Pulp based | **2.8** | **2.1** | <0.1 | <0.1 | 85.3 | 90.2 | <0.1 |
| 50% of MCC is CPH Pulp based | **2.8** | **2.5** | <0.1 | <0.1 | 84.2 | 90.3 | 0.9 |
| 100% of MCC is CPH Pulp based | **4.2** | **3.3** | <0.1 | <0.1 | 80.1 | 87.5 | <0.1 |

## Claims

1. A co-attrited microcrystalline cellulose/carboxymethylcellulose (MCC/CMC) stabilizer composition comprising:
a microcrystalline cellulose (MCC) made from a non-dissolving cellulose pulp, the non-dissolving cellulose pulp having a native hemicellulose content that is 2% to 10% of the non-dissolving cellulose pulp on a dry weight basis, and the MCC having a non-dissolving cellulose pulp content that is 15% to 100% of the MCC on a dry weight basis; and
a carboxymethylcellulose (CMC),
wherein the MCC and CMC are provided in a weight ratio of MCC to CMC that is 95:5 to 70:30;
the MCC and the CMC are co-attrited; and
the co-attrited MCC/CMC stabilizer has an initial viscosity of 400 mPa.s (cps) to 700 mPa.s (cps) when dispersed in water at 2.6% solids when measured using a RVT Viscometer at 20 rpm and 20°C to 23°C.

2. The stabilizer composition of claim 1, further comprising a CMC having a degree of substitution (DS) of 0.9-1.5 and a viscosity of 200-4000 mPa.s (cps) wherein the co-attrited MCC/CMC stabilizer before drying is wet blended with the CMC having a degree of substitution (DS) of 0.9-1.5 and a viscosity of 200-4000 mPa.s (cps), wherein the viscosity of the CMC is measured using a Brookfield viscometer at 2% solids in water of 25°C at 30 rpm, spindle #2.

3. The stabilizer composition of claim 2, wherein the CMC having a degree of substitution (DS) of 0.9-1.5 and a viscosity of 200-4000 mPa.s (cps) is wet blended in a weight ratio of co-attrited MCC/CMC stabilizer to CMC having a degree of substitution (DS) of 0.9-1.5 and a viscosity of 200-4000 mPa.s (cps) that is 99:1 to 85:15, wherein the viscosity of the CMC is measured using a Brookfield viscometer at 2% solids in water of 25°C at 30 rpm, spindle #2.

4. The stabilizer composition of any preceding claim, wherein the CMC having a degree of substitution (DS) of 0.9-1.5 and a viscosity of 200-4000 mPa.s (cps) is wet blended in a weight ratio of co-attrited MCC/CMC stabilizer to CMC having a degree of substitution (DS) of 0.9-1.5 and a viscosity of 200-4000 mPa.s (cps) that is 92:8, wherein the viscosity of the CMC is measured using a Brookfield viscometer at 2% solids in water of 25°C at 30 rpm, spindle #2.

5. The stabilizer composition of any preceding claim, wherein the non-dissolving cellulose pulp is paper grade pulp, fluff pulp, Kraft pulp, sulfite pulp, soda pulp, southern bleached softwood pulp, northern bleached softwood pulp, bleached Eucalyptus pulp, bleached hardwood pulp, non-wood pulp, cellulosic agricultural residue, or any combination thereof.

6. A stabilized plant protein based drink composition comprising the co-attrited MCC/CMC stabilizer of any of claims 1-5.

7. The stabilized drink composition of claim 6, wherein the drink is peanut milk.

8. A method for stabilizing a plant protein based drink composition comprising mixing the plant protein based drink and the co-attrited MCC/CMC stabilizer of any of claims 1-5.

9. The method of stabilizing a plant protein based drink composition of claim 8, wherein the drink is peanut milk.

10. A method of making a stabilizer composition, the method comprising:
co-attriting (i) a microcrystalline cellulose (MCC) having a non-dissolving cellulose pulp content that is 15% to 100% of the MCC on a dry weight basis wherein the non-dissolving cellulose pulp has a native hemicellulose content that is 2% to 10% of the non-dissolving cellulose pulp on a dry weight basis; and (ii) a carboxymethylcellulose (CMC),
wherein the amount of MCC and the amount of CMC are in a weight ratio of 95:5 to 70:30; and
wherein the co-attrited MCC/CMC has an initial viscosity of 400 mPa.s (cps) to 700 mPa.s (cps) when dispersed in water at 2.6% solids when measured using a RVT Viscometer at 20 rpm and 20°C to 23°C.

11. The method of claim 10, further comprising:
wet blending an additional CMC having a degree of substitution (DS) of 0.9-1.5 and a viscosity of 200-4000 mPa.s (cps) with the co-attrited MCC/CMC, wherein the viscosity of the CMC is measured using a Brookfield viscometer at 2% solids in water of 25°C at 30 rpm, spindle #2.

12. The method of claim 11, wherein the weight ratio of co-attrited MCC/CMC to CMC having a degree of substitution (DS) of 0.9-1.5 and a viscosity of 200-4000 mPa.s (cps) is 99:1 to 85:15, wherein the viscosity of the CMC is measured using a Brookfield viscometer at 2% solids in water of 25°C at 30 rpm, spindle #2.

13. The method of claim 10, wherein the weight ratio of co-attrited MCC/CMC stabilizer to CMC having a degree of substitution (DS) of 0.9-1.5 and a viscosity of 200-4000 mPa.s (cps) is 92:8, wherein the viscosity of the CMC is measured using a Brookfield viscometer at 2% solids in water of 25°C at 30 rpm, spindle #2.

## Patentansprüche

1. Stabilisatorzusammensetzung aus co-attritierter mikrokristalliner Cellulose/Carboxymethylcellulose (MCC/CMC), umfassend:
eine mikrokristalline Cellulose (MCC), die aus einer sich nicht lösenden Cellulosepülpe hergestellt ist, wobei die sich nicht lösende Cellulosepülpe einen Gehalt an nativer Hemicellulose aufweist, der 2 % bis 10 % der sich nicht lösenden Cellulosepülpe, auf einer Trockengewichtsbasis, beträgt, und die MCC einen Gehalt an sich nicht lösender Cellulosepülpe aufweist, der 15 % bis 100 % der MCC, auf einer Trockengewichtsbasis, beträgt; und
eine Carboxymethylcellulose (CMC),
wobei die MCC und CMC in einem Gewichtsverhältnis von MCC zu CMC bereitgestellt sind, das 95:5 bis 70:30 beträgt;
die MCC und die CMC co-attritiert sind; und
der Stabilisator aus co-attritierter MCC/CMC eine anfängliche Viskosität von 400 mPa.s (cPs) bis 700 mPa.s (cPs) aufweist, wenn er in Wasser in einer Menge von 2,6 % Feststoffen, unter Anwendung eines RVT-Viskosimeters bei 20 UpM und 20 °C bis 23 °C gemessen, dispergiert wird.

2. Stabilisatorzusammensetzung nach Anspruch 1, ferner eine CMC umfassend, die einen Substitutionsgrad (DS) von 0,9-1,5 und eine Viskosität von 200-4000 mPa.s (cPs) aufweist, wobei der Stabilisator aus co-attritierter MCC/CMC vor dem Trocknen mit der CMC nassgemischt wird, die einen Substitutionsgrad (DS) von 0,9-1,5 und eine Viskosität von 200-4000 mPa.s (cPs) aufweist, wobei die Viskosität der CMC unter Anwendung eines Brookfield-Viskosimeters bei 2 % Feststoffen in Wasser von 25 °C bei 30 UpM, Spindel Nr. 2 gemessen wird.

3. Stabilisatorzusammensetzung nach Anspruch 2, wobei die CMC, die einen Substitutionsgrad (DS) von 0,9-1,5 und eine Viskosität von 200-4000 mPa.s (cPs) aufweist, in einem Gewichtsverhältnis von Stabilisator aus co-attritierter MCC/CMC zu CMC, die einen Substitutionsgrad (DS) von 0,9-1,5 und eine Viskosität von 200-4000 mPa.s (cPs) aufweist, das 99:1 bis 85:15 beträgt, nassgemischt wird, wobei die Viskosität der CMC unter Anwendung eines Brookfield-Viskosimeters bei 2 % Feststoffen in Wasser von 25 °C bei 30 UpM, Spindel Nr. 2 gemessen wird.

4. Stabilisatorzusammensetzung nach einem vorhergehenden Anspruch, wobei die CMC, die einen Substitutionsgrad (DS) von 0,9-1,5 und eine Viskosität von 200-4000 mPa.s (cPs) aufweist, in einem Gewichtsverhältnis von Stabilisator aus co-attritierter MCC/CMC zu CMC, die einen Substitutionsgrad (DS) von 0,9-1,5 und eine Viskosität von 200-4000 mPa.s (cPs) aufweist, das 92:8 beträgt, nassgemischt wird, wobei die Viskosität der CMC unter Anwendung eines Brookfield-Viskosimeters bei 2 % Feststoffen in Wasser von 25 °C bei 30 UpM, Spindel Nr. 2 gemessen wird.

5. Stabilisatorzusammensetzung nach einem vorhergehenden Anspruch, wobei die sich nicht lösende Cellulosepülpe Pülpe von Papiergüte, geflockte Zellstoffpülpe, Kraftpülpe, Sulfitpülpe, Sodapülpe, Pülpe von gebleichtem südlichem Weichholz, Pülpe von gebleichtem nördlichem Weichholz, gebleichte Eukalyptuspülpe, gebleichte Hartholzpülpe, Nichtholzpülpe, cellulosischer landwirtschaftlicher Rückstand oder eine beliebige Kombination davon ist.

6. Getränkezusammensetzung auf der Basis von stabilisierten Pflanzenproteinen, umfassend den Stabilisator aus co-attritierter MCC/CMC nach einem der Ansprüche 1-5.

7. Stabilisierte Getränkezusammensetzung nach Anspruch 6, wobei das Getränk Erdnussmilch ist.

8. Verfahren zum Stabilisieren einer Getränkezusammensetzung auf der Basis von Pflanzenproteinen, umfassend Mischen des Getränks auf der Basis von Pflanzenproteinen und des Stabilisators aus co-attritierter MCC/CMC nach einem der Ansprüche 1-5.

9. Verfahren zum Stabilisieren einer Getränkezusammensetzung auf der Basis von Pflanzenproteinen nach Anspruch 8, wobei das Getränk Erdnussmilch ist.

10. Verfahren zum Herstellen einer Stabilisatorzusammensetzung, wobei das Verfahren Folgendes umfasst:
Co-attritieren (i) einer mikrokristallinen Cellulose (MCC), die einen Gehalt an sich nicht lösender Cellulosepülpe aufweist, der 15 % bis 100 % der MCC, auf einer Trockengewichtsbasis beträgt, wobei die sich nicht lösende Cellolosepülpe einen Gehalt an nativer Hemicellulose aufweist, der 2 % bis 10 % der sich nicht lösenden Cellolosepülpe, auf einer Trockengewichtsbasis, beträgt; und (ii) einer Carboxymethylcellulose (CMC),
wobei die Menge an MCC und die Menge an CMC in einem Gewichtsverhältnis von 95:5 bis 70:30 vorliegen; und
wobei die co-attritierte MCC/CMC eine anfängliche Viskosität von 400 mPa.s (cPs) bis 700 mPa.s (cPs) aufweist, wenn sie in Wasser in einer Menge von 2,6 % Feststoffen, unter Anwendung eines RVT-Viskosimeters bei 20 UpM und 20 °C bis 23 °C gemessen, dispergiert wird.

11. Verfahren nach Anspruch 10, ferner Folgendes umfassend:
Nassmischen einer zusätzlichen CMC, die einen Substitutionsgrad (DS) von 0,9-1,5 und eine Viskosität von 200-4000 mPa.s (cPs) aufweist, mit der co-attritierten MCC/CMC, wobei die Viskosität der CMC unter Anwendung eines Brookfield-Viskosimeters bei 2 % Feststoffen in Wasser von 25 °C bei 30 UpM, Spindel Nr. 2 gemessen wird.

12. Verfahren nach Anspruch 11, wobei das Gewichtsverhältnis von co-attritierter MCC/CMC zu CMC, die einen Substitutionsgrad (DS) von 0,9-1,5 und eine Viskosität von 200-4000 mPa.s (cPs) aufweist, 99:1 bis 85:15 beträgt, wobei die Viskosität der CMC unter Anwendung eines Brookfield-Viskosimeters bei 2 % Feststoffen in Wasser von 25 °C bei 30 UpM, Spindel Nr. 2 gemessen wird.

13. Verfahren nach Anspruch 10, wobei das Gewichtsverhältnis von Stabilisator aus co-attritierter MCC/CMC zu CMC, die einen Substitutionsgrad (DS) von 0,9-1,5 und eine Viskosität von 200-4000 mPa.s (cPs) aufweist, 92:8 beträgt, wobei die Viskosität der CMC unter Anwendung eines Brookfield-Viskosimeters bei 2 % Feststoffen in Wasser von 25 °C bei 30 UpM, Spindel Nr. 2 gemessen wird.

## Revendications

1. Composition de stabilisant constituée de cellulose microcristalline/carboxyméthylcellulose (MCC/CMC) ayant subi une co-attrition, comprenant :
une cellulose microcristalline (MCC) fabriquée à partir d'une pâte de cellulose non soluble, la pâte de cellulose non soluble ayant une teneur en hémicellulose native qui est de 2 % à 10 % de la pâte de cellulose non soluble sur le produit sec et la MCC ayant une teneur en pâte de cellulose non soluble qui est de 15 % à 100 % de la MCC sur le produit sec, et
une carboxyméthylcellulose (CMC),
dans laquelle la MCC et la CMC sont fournies dans un rapport de poids de la MCC à la CMC qui est de 95 : 5 à 70 : 30,
la MCC et la CMC son soumises à une co-attrition, et
le stabilisant constitué de MCC/CMC ayant subi une co-attrition a une viscosité initiale de 400 mPa.s (cP) à 700 mPa.s (cP) lorsqu'il est dispersé dans l'eau à 2,6 % de solides, mesurée en utilisant un viscosimètre RVT à 20 t/min, et de 20 °C à 23 °C.

2. Composition de stabilisant selon la revendication 1, comprenant en outre une CMC ayant un degré de substitution (DS) de 0,9 à 1,5 et une viscosité de 200-4000 mPa.s (cP), dans laquelle le stabilisant constitué de MCC/CMC ayant subi une co-attrition est mélangé par voie humide avant le séchage avec la CMC ayant un degré de substitution (DS) de 0,9 à 1,5 et une viscosité de 200-4000 mPa.s (cP), dans laquelle la viscosité de la CMC est mesurée en utilisant un viscosimètre Brookfield à 2 % de solides dans l'eau à 25 °C, à 30 t/min, avec la broche n° 2.

3. Composition de stabilisant selon la revendication 2, dans laquelle la CMC ayant un degré de substitution (DS) de 0,9 à 1,5 et une viscosité de 200-4000 mPa.s (cP) est mélangée par voie humide dans un rapport de poids du stabilisant constitué de MCC/CMC ayant subi une co-attrition à la CMC ayant un degré de substitution (DS) de 0,9 à 1,5 et une viscosité de 200-4000 mPa.s (cP) qui est de 99 : 1 à 85 : 15, dans laquelle la viscosité de la CMC est mesurée en utilisant un viscosimètre Brookfield à 2 % de solides dans l'eau à 25 °C, à 30 t/min., avec la broche n° 2.

4. Composition de stabilisant selon l'une quelconque des revendications précédentes, dans laquelle la CMC ayant un degré de substitution (DS) de 0,9 à 1,5 et une viscosité de 200-4000 mPa.s (cP) est mélangée par voie humide dans un rapport de poids du stabilisant constitué de MCC/CMC ayant subi une co-attrition à la CMC ayant un degré de substitution (DS) de 0,9 à 1,5 et une viscosité de 200-4000 mPa.s (cP) qui est de 92 : 8, dans laquelle la viscosité de la CMC est mesurée en utilisant un viscosimètre Brookfield à 2 % de solides dans l'eau à 25 °C, à 30 t/min., avec la broche n° 2.

5. Composition de stabilisant selon l'une quelconque des revendications précédentes, dans laquelle la pâte de cellulose non soluble est une pâte à papier, une pâte en flocons, une pâte Kraft, une pâte au sulfite, une pâte à la soude, une pâte de résineux du Sud blanchie, une pâte de résineux du Nord blanchie, une pâte d'eucalyptus blanchie, une pâte de feuillus blanchie, une pâte non ligneuse, des résidus cellulosiques agricoles ou une quelconque combinaison de ceux-ci.

6. Composition de boisson à base de protéines végétales stabilisée comprenant le stabilisant constitué de MCC/CMC ayant subi une co-attrition selon l'une quelconque des revendications 1 à 5.

7. Composition de boisson stabilisée selon la revendication 6, dans laquelle la boisson est du lait d'arachide.

8. Procédé pour stabiliser une composition de boisson à base de protéines végétales comprenant le mélange de la boisson à base de protéines végétales et du stabilisant constitué de MCC/CMC ayant subi une co-attrition selon l'une quelconque des revendications 1 à 5.

9. Procédé pour stabiliser une composition de boisson à base de protéines végétales selon la revendication 8, dans lequel la boisson est du lait d'arachide.

10. Procédé pour fabriquer une composition de stabilisant, le procédé comprenant :
une co-attrition (i) d'une cellulose microcristalline (MCC) ayant une teneur en pâte de cellulose non soluble qui est de 15 % à 100 % de la MCC sur le produit sec, dans lequel la pâte de cellulose non soluble a une teneur en hémicellulose native qui est de 2 % à 10 % de la pâte de cellulose non soluble sur le produit sec, et (ii) d'une carboxyméthylcellulose (CMC),
dans lequel la quantité de MCC et la quantité de CMC sont contenues dans un rapport de poids de 95 : 5 à 70 : 30, et
dans lequel la MCC/CMC soumise à une co-attrition a une viscosité initiale de 400 mPa.s (cP) à 700 mPa.s (cP) lorsqu'elle est dispersée dans l'eau à 2,6 % de solides, mesurée en utilisant un viscosimètre RVT à 20 t/min. et de 20 °C à 23 °C.

11. Procédé selon la revendication 10, comprenant en outre :
le mélange par voie humide d'une CMC complémentaire ayant un degré de substitution (DS) de 0,9 à 1,5 et une viscosité de 200-4000 mPa.s (cP) avec la MCC/CMC ayant subi une co-attrition, dans lequel la viscosité de la CMC est mesurée en utilisant un viscosimètre Brookfield à 2 % de solides dans l'eau à 25 °C, à 30 t/min, avec la broche n° 2.

12. Procédé selon la revendication 11, dans lequel le rapport en poids de la MCC/CMC ayant subi une co-attrition à la CMC ayant un degré de substitution (DS) de 0,9 à 1,5 et une viscosité de 200-4000 mPa.s (cP) est de 99 : 1 à 85 : 15, dans lequel la viscosité de la CMC est mesurée en utilisant un viscosimètre Brookfield à 2 % de solides dans l'eau à 25 °C, à 30 t/min., broche n° 2.

13. Procédé selon la revendication 10, dans lequel le rapport en poids du stabilisant constitué de MCC/CMC ayant subi une co-attrition à la CMC ayant un degré de substitution (DS) de 0,9 à 1,5 et une viscosité de 200-4000 mPa.s (cP) est de 92 : 8, dans lequel la viscosité de la CMC est mesurée en utilisant un viscosimètre Brookfield à 2 % de solides dans l'eau à 25 °C, à 30 t/min., broche n° 2.
